# EUROPEAN PATENT APPLICATION

(11) **EP 0 987 087 A2**
(43) Date of publication of application: **22.03.2000**
(21) Application number: 99307207.3
(22) Date of filing: 13.09.1999
(51) Int. Cl.: B25J 17/00

(54) **Working apparatus**

(30) Priority: 17.09.1998 JP 28048698
(71) Applicant: FANUC LTD, Minamitsuru-gun, Yamanashi 401-0597 (JP)
(72) Inventor: Nihei, Ryo, Fujiyoshida-shi, Yamanashi 403-0005 (JP); Uematu, Masaaki, Koufu-shi, Yamanashi 400-0851 (JP); Matsumoto, Kuniyasu, FANUC Dai3virakaramatsu, Minamitsuru-gun, Yamanashi 401-0511 (JP); Abe, Kenichiro, FANUC Manshonharimomi, Minamitsuru-gun, Yamanashi 401-0511 (JP)
(74) Representative: Billington, Lawrence Emlyn

(57) **Abstract**

A working apparatus is structured with a link mechanism including: a plurality of links (7) whose tip ends are connected to tool mounting means; and a workpiece holding portion (12) for holding a workpiece. A table (10) of the workpiece holding portion (12) is made rotatable about a first shaft (J1) parallel to a floor face and a second shaft (J2) perpendicular to the floor face. When working is performed on a workpiece mounted on the table (10) of the workpiece holding means (12) with a working tool (9) mounted on the tool mounting means (4), attitude of the tool (9) with respect to the workpiece is set to a desired one by controlling rotations about the first shaft (J1) and the second shaft (J2) of the table (10) of the workpiece holding portion (12).

## Description

The present invention relates to improvements in a working apparatus including a link mechanism.

In a working apparatus provided with a parallel link mechanism, one is known where the parallel link mechanism is configured such that a base plate (fixed member) and a travelling plate (moving member) are connected to each other by a plurality of links arranged in parallel and the links are respectively driven cooperatively by driving sources such as servo-motors so that the travelling plate is moved relative to the base plate, thereby changing the position and the attitude of the travelling plate relative to the base plate.

Such a parallel link mechanism has the following advantages as compared with a serial type link mechanism. The former has a rigidity higher than the latter; operation speed of a travelling plate in the former is increased easily; the former has a high operation accuracy; the former allows size-reduction of a motor and electric power saving; and the entire structure of the former is simplified; and since identical parts standardized can be used in the former, time and labor saving for design, manufacture and maintenance is facilitated. For these advantages, the parallel link mechanism is utilized for working apparatuses of various fields such as various machine tools and handling robots.

In a working apparatus provided with such a parallel link mechanism, it is common that various tools such as a rooter for removing burr, various end mills and drills, welding guns, YAG lasers or the like are mounted to a travelling plate for performing processing or machining on a workpiece (an object to be worked) fixed on a table of a workpiece holding portion.

However, due to the structure of the parallel link mechanism, there are drawbacks that there is a limitation in a change amount in attitude of the travelling plate relative to the base plate, so that a complicated processing or machining can not be performed in a 3-dimensional space, and the like.

For the purpose of solving the above problems, there has been disclosed in Japanese Patent Application Laid-Open (JP-A) No. 7-116983 a working apparatus where a plurality of shafts (additional shafts) for rotation or swing are disposed between a travelling plate and a tool so that freedom for changing attitude of the tool is improved. In this prior art, however, there is a problem where it is necessary to strengthen rigidities of respective portions of links and/or to increase outputs of a power source and driving motors in order to overcome weight increase of a peripheral portion of the travelling plate due to mounting of the additional shafts.

Also, even if the rigidities are strengthened or the outputs are increased, there is such a problem that, since these additional shafts are connected in serial between the travelling plate and the tool, the rigidity of the entire apparatus is lowered as a whole and vibrations are generated by rotation of a motor driving a tool, for example, a rooter, an end mill, a drill or the like, mounted on distal ends of the additional shafts. Furthermore, even if the travelling plate is moved at a high speed, operation of the tool at the distal ends can not follow the high speed movement of the travelling plate so that characteristics of the parallel link mechanism itself can not be developed sufficiently. In addition, there is such a problem that it is not easy to carry out wiring or the like for the additional shafts in spaces in the complicated link mechanism in a threading manner, and a structure around the travelling plate is large-sized necessarily.

On the other hand, there has been disclosed in JP-A No. 9-234638 a working machine structured such that the attitude of a travelling plate can largely be changed by using only a travelling plate. In this conventional art, when an inclination angle of the travelling plate is enlarged, it is necessary to stretch links of a telescopic structure extremely. As a result, there is still a problem that rigidities of links themselves are lowered and/or the structure of the working machine is made complicated.

An object of the invention is to provide a working apparatus equipped with a link mechanism which has a sufficient rigidity and which is capable of performing such working as a complicated machining or processing, or a work or article handling, in a 3-dimensional space at a high speed and accurately.

In order to achieve the above object, a working apparatus according to the present invention comprises a link mechanism and workpiece holding means, wherein the link mechanism has a structure such that a fixing member and a moving member are connected to each other by a plurality of links, the moving member is moved relative to the fixing member by driving the respective links by servo-motors, and the workpiece holding means can change the attitude of a workpiece independently of the link mechanism while holding the workpiece. Furthermore, the moving member of the link mechanism is provided with tool mounting means for mounting a working tool for performing working on the workpiece held by the workpiece holding means.

It is noted that operation of the link mechanism and operation for changing the attitude of the workpiece holding means may be controlled by a common controller.

According to the present invention, even if an amount of change in the attitude in the travelling plate mounted with the tool is restricted due to the structure of the link mechanism, the attitude of the tool with respect to the workpiece can largely be changed by operating the holding means holding the workpiece to change the attitude of the workpiece. As a result, working such as a complicated machining or an article handling in a 3-dimensional space can be securely performed, maintaining the position and the attitude of the tool with respect to the workpiece under an appropriate relationship for the machining and the working.

### BRIEF DESCRIPTION OF THE DRAWINGS

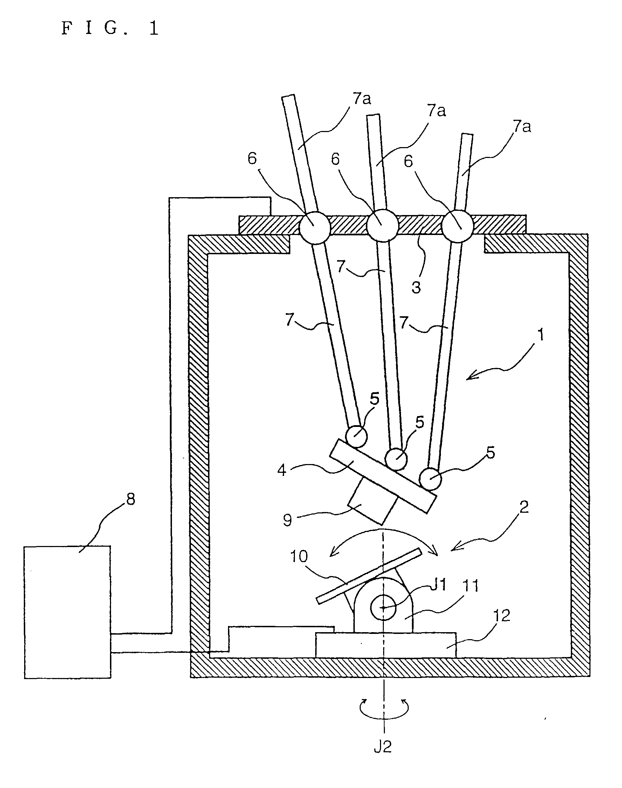

Fig. 1 is a concept view showing a structure of a working apparatus according to an embodiment of the present invention.

As shown in Fig. 1, a working apparatus comprises a parallel link mechanism 1 for performing processing, machining or handling work with various tools attached thereto, and a workpiece holding portion 2 for holding a workpiece which is an object to be worked.

The parallel link mechanism 1 comprises a base plate 3 serving as a fixing member, a travelling plate 4 serving as a moving member, and a plurality of (three in Fig. 1) links 7 disposed in parallel and connecting the base plate 3 and the travelling plate 4 to each other.

Three universal joints 5 are provided on the travelling plate 4 at equal intervals along a peripheral direction of a circle having a predetermined radius assumed for the travelling plate 4. Also, three universal joints 6 are provided on the base plate 3 at equal intervals along a peripheral direction of a circle which is assumed for the base plate 3 and which has a radius slightly larger than that of the circle of the travelling plate 4.

The distal end (lower end) of each link 7 is connected to the travelling plate 4 via the universal joint 5 and it can be tilted to the travelling plate 4 in various directions. Furthermore, an upper portion of each link 7 penetrates the universal joint 6 mounted on the base plate 3 (therefore, it penetrates the base plate 3), so that the link 7 is supported to the base plate 6 by the universal joint 6 such that it can be tilted.

A ball screw portion 7a is formed on an upper portion of each link 7. On the other hand, a ball nut (not shown) which is engagable with the ball screw portion 7a of the link 7 is mounted on an inner peripheral face of the universal joint 6 mounted on the base plate 3 so that the ball nut is rotatable to the universal joint 6 but it is not movable in the axial direction thereof. In order to prevent the link 7 penetrating the universal joint 6 from rotating relative to the universal joint 6, a set of boss and serration is formed between the link 7 and the universal joint 6.

When each ball nut is rotated by a corresponding servo-motor (not shown), each corresponding link 7 is moved linearly without rotating relative to the ball nut, so that a thrust amount of the link 7 from the ball nut towards the travelling plate 4, i.e., a distance from the distal end (which has been engaged with the universal joint 5) of the link 7 to a portion of the link 7 which has been engaged with the ball nut, changes.

Accordingly, when each servo-motor is driven and controlled on the basis of instruction from a numeral controller 8, corresponding ball nut is rotated by a predetermined amount so that the thrust amount of each link 7 can be selected arbitrarily. As a result, the travelling plate 4 mounted on the distal ends of the respective links 7 via the universal joints 5 can take any position (height) and any attitude (inclination) relative to the base plate 3.

The structure of the working apparatus equipped with the parallel link mechanism mentioned above is known and further explanation thereof will be omitted.

A tool 9 (for example, a rooter for removing burr, various end mills, a welding gun or a YAG laser, a hand for handling an article, or the like) is mounted on the back face (a face opposed to the face mounted with the universal joints 5) of the travelling plate 4 through tool mounting means (not shown). Operation of this tool 9 is controlled by the controller 8 outputting command to each servo-motor for adjusting the thrust amount of corresponding link or by an exclusive controller (not shown).

The workpiece holding portion 2 for holding a workpiece (not shown) which is an object be worked comprises a table 10 provided with a mechanism for mounting a workpiece such as a clamp, a magnetic chuck, and the like, a pivoting body 11 having a rotation axis J1 parallel to a floor face, for supporting the table 10 swingably about the rotation axis J1, and a base stand 12 for supporting the pivoting body 11. Furthermore, the pivoting body 11 itself is mounted pivotably about a vertical rotation axis J2 which is mounted to the base stand 12 and which is perpendicular to the floor face.

Attitude change of the table 10, namely, swinging operation of the table about the rotation axis J1 and pivoting operation of the pivoting body 11 about the rotation axis J2, can be performed by stepping attitude control effected utilizing an air cylinder, a rotary cylinder or the like as a driving source.

Regarding the swinging operation of the table 10 about the rotation axis J1, for example, the table 10 is swung utilizing rotation operation effected by forward and backward operations of a translation rod (not shown) of the air cylinder or by rotation operation of a rotator (not shown) of the rotary cylinder, so that one of a first state where the table 10 is maintained horizontally and a second state where the table 10 is inclined up to a swing limit of one of left and right directions may selectively be realized. In this case, when the air cylinder is used, devises at both end portions of the air cylinder are pivoted to the table 10 and the pivoting body 11 in an offset manner from the rotation axis J1. Also, when the rotary cylinder is used, the rotation axis J1 is configured by assembling the rotary cylinder between the table 10 and the pivoting body 11.

Also, pivoting operation of the pivoting body 11 about the rotation axis J2 can be performed by employing a mechanism similar to the mechanism for the swinging operation of the table 10 about the rotation axis J1. That is, the rotation axis J2 is configured by pivoting clevises of both end portions of an air cylinder to the pivoting body 11 and the base stand 12 in an offset manner from the rotation axis J2 or by assembling a rotary cylinder between the pivoting body 11 and the base stand 12.

It is to be noted that attitude change of the table 10 may be performed by a servo-motor instead of the above-mentioned air cylinder or rotary cylinder. Furthermore, control of the servo-motor may be performed by the controller 8 controlling the servo-motors for controlling operation of the above-mentioned parallel link mechanism 1. Also, attitude change of the table 10 may be performed manually by an operator without using such a driving source as an air cylinder, a rotary cylinder, a servo-motor or the like (or together with the driving source).

For example, lock nuts are provided between the table 10 and the pivoting body 11 and between the pivoting body 11 and the base stand 12, and the table 10 is inclined at any angle about the rotation axis J1, while the pivoting body 11 is inclined at any angle about the rotation axis J2, by fastening the lock nuts with a hand of an operator, so that the table 10 can be caused to take a desired attitude. In addition, when a rotated position of the table 10 or the pivoting body 11 is detected by a rotation detector (for example, an indicator or a dial), the operator can cause the table 10 or the pivoting body 11 to take a desired attitude.

As the workpiece holding portion 2 has a very simple structure comprising the table 10, the pivoting body 11 and the base stand 12, it is easy to secure rigidity of a mechanical portion of the workpiece holding portion 2. Also, it is possible to secure a swinging amount of the table 10 about the rotation axis J1 and a pivoting amount of the pivoting body 11 about the rotation axis J2 sufficiently largely.

Whether or not the tool 9 mounted on the travelling plate 4 can perform a sufficient processing, machining or handling work on a workpiece mounted on the table 10 depends on whether or not the tool 9 can take position and attitude suitable for processing or machining a workpiece. However, there is a limitation in a range in which attitude change of the tool 9 with respect to the workpiece can be secured by changing position and attitude of the travelling plate 4. Accordingly, in the present invention, since not only position and attitude of the travelling plate 4 are changed but also attitude of the workpiece can be changed, ranges of position and attitude which the tool 9 can take for the workpiece are expanded in cooperation with them both. As a result, the tool 9 can perform complicated processing, machining or handling work on a workpiece mounted on the table 10 on the basis of a relationship in relative position and attitude between the tool 9 and the workpiece.

For example, in a case that grooving is performed by the tool 9 on a side face (an outer peripheral face vertical to a face of the table 10) of a workpiece mounted on the table 10, it is almost impossible to perform such machining only by changing position and attitude of the travelling plate 4. However, such machining is made possible by changing attitude of the table 10 on which the workpiece is mounted in addition to these position and attitude changes.

In the prior art (JP-A No. 7-116983), since additional shafts are mounted between a tool and a workpiece in order to expand ranges of position and attitude which the tool can take for the workpiece, rigidity is lowered in a mechanical portion thereof, vibrations occur due to rotation of a motor for driving a tool, and/or delay occurs in operation of a distal end of the tool to the travelling plate. On the other hand, in the present embodiment, such problems do not occur, as the tool 9 can directly be mounted on the travelling plate 4. Also, in this embodiment, the weight of the travelling plate 4 can be reduced by a weight corresponding to the weight of the additional shafts, and a peripheral structure of the travelling plate 4 can be simplified because there is not such additional shafts. Accordingly, in the case of the present embodiment, even when the tool 9 requiring a power supply line having a large diameter is mounted on the travelling plate 4, or even when a YAG laser machining apparatus equipped with a laser beam supply line which is difficult to bend is mounted on the travelling plate 4 as the tool 9, there is no interference with handling the power supply line or the laser beam supply line.

Furthermore, the present embodiment may be structured such that a rotation axis J3 (not shown) perpendicular to the rotation axis J1 on a horizontal plane is provided instead of the rotation axis J2 and the table 10 is supported by these rotation axes J1 and J3. When a workpiece having a square pillar shape or a column shape is mounted on the table 10, and the above-mentioned three servo-motors for controlling position and attitude of the travelling plate 4 and the servo-motors for the rotation axis J1 and the rotation shaft J3 are respectively controlled cooperatively on the basis of instructions from the controller 8 according to a predetermined program, a continuous machining or processing work is performed on side faces (faces except for a top face and a bottom face opposed to the table 10) of the workpiece by the tool 9.

Although in the figure the links 7 are not shown as being parallel, it will be appreciated that in some embodiments the links 7 will be parallel or at least substantially parallel.

## Claims

1. A working apparatus, comprising:
a link mechanism having a fixed member and a moving member, in which the fixed member and the moving member are connected by a plurality of links and the moving member is moved relative to the fixed member by driving the respective links by respective servo-motors;
workpiece holding means for changing the attitude of a workpiece while holding the workpiece independently of the link mechanism; and
tool mounting means for mounting a working tool for performing working on the workpiece held by the workpiece holding means, and provided on the moving member.

2. A working apparatus according to claim 1, wherein operation of the link mechanism and attitude change of the workpiece holding means are controlled by the same controller.

3. A working apparatus according to claim 1, wherein the workpiece holding means comprises a pivoting body rotatable about a first axial center perpendicular to a face on which the working apparatus is mounted, a table which is mounted on the pivoting body rotatably about a second axial center perpendicular to the first axial center, and on which table the workpiece is mounted.

4. A working apparatus according to claim 3, wherein rotation of the pivoting body about the first axial center and rotation of the table about the second axial center are respectively driven by servo-motors.

5. A working apparatus according to claim 4, wherein drives of the servo-motors of claim 4 are controlled according to instructions from the controller for controlling the servo-motors for driving the links.

6. A working apparatus according to claim 3,4 or 5 wherein rotation of the pivoting body about the first axial center and rotation of the table about the second axial center are performed by fastening or loosening respective lock nuts.

7. A working apparatus according to any one of claims 3 to 6, further comprising rotation amount detecting means for detecting a rotation amount of the pivoting body about the first axial center and detecting a rotation amount of the table about the second axial center.

8. A working apparatus according to any one of the preceding claims, wherein the workpiece holding means comprises a first member rotatable about a first axial center parallel to a face on which the working apparatus is mounted, and a second member rotatable about a second axial center parallel to the face on which the working apparatus is mounted and perpendicular to the first axial center.

9. A working apparatus according to any one of the preceding claims, wherein the link mechanism is a parallel link mechanism in which the plurality of links are arranged in parallel or at least substantially parallel.
